# EUROPEAN PATENT APPLICATION

(11) **EP 3 858 674 A1**
(43) Date of publication of application: **04.08.2021**
(21) Application number: 21154449.9
(22) Date of filing: 29.01.2021
(51) Int. Cl.: B60Q 1/56, B60Q 1/26

(54) **LAMP ASSEMBLY FOR A VEHICLE**

(30) Priority: 29.01.2020 GB 202001256
(71) Applicant: Arrival Limited, London W14 8TS (GB)
(72) Inventor: Gadd, James, London, W14 8TS (GB)
(74) Representative: Jarrett, Daniel Phillip

(57) **Abstract**

There is provided a lamp assembly (12) for a vehicle (10), the lamp assembly (12) comprising a housing (33) comprising a cavity (35a, 35b, 35c) configured to house a first light source; an exterior cover (38) configured to transmit light from within the cavity (35a, 35b, 35c) to an exterior of the vehicle (10) in at least a first direction; and a window (26) provided in a wall of the housing (33). The window (26) is oriented to transmit light in a second direction towards a first component of the vehicle (10).

## Description

### Field

The present disclosure relates to a lamp assembly for a vehicle and a corresponding vehicle assembly.

### Background

Typically, components of a vehicle are each illuminated by a dedicated lamp. In addition, separate lamps are used as head lights and tail lights. This arrangement results in additional, complex, assembly processes, namely, the fixation of a separate lamp and a separate wiring harness to power the lamp.

Such an arrangement may be particularly disadvantageous when the components of the vehicle that are to be illuminated are on a movable portion of the vehicle (such as a door), rather than a static portion. For example, due to legal requirements for number plate positioning and illumination, the number plate must often be positioned on a movable body panel, whereas the primary rear lamps (legally) need to be positioned in an area which is typically static, i.e. the rear quarter panel. In these arrangements, the wiring harness needs to bridge between the static portion and the movable portion. Articulating areas of wiring harness are not only difficult to assemble, but can fail prematurely due to moisture ingress, corrosion, micro-fracturing of conductors, etc.

In some situations, the number plate can be positioned so that it is mounted to a permanently static portion of the vehicle, i.e. a rear bumper, which avoids the complex harness routing and articulation. However, this still results in a separate lighting module, with additional cost incurred in the production and assembly of this module. Improved lighting solutions are therefore desirable.

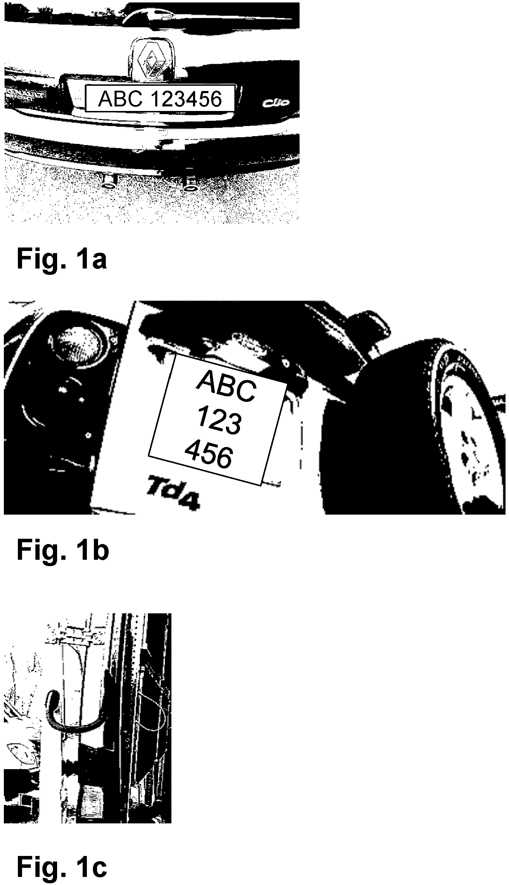

Figures 1a-1c each show a different known rear lamp assembly configuration for a vehicle.

Figure 1a shows a number plate mounted within a shallow recess on the tailgate or rear hatch of a car. A lamp is mounted in the bumper of the car and is configured to illuminate the number plate of the car, as required by vehicle regulations in many jurisdictions.

Figure 1b shows an alternative lamp configuration for illuminating the number plate of a vehicle. As shown in Figure 1b, the number plate is mounted below a ledge that comprises a lamp configured to illuminate the number plate from above. Because the lamp of Figure 1b is provided in the rear door of the vehicle, the harness that supplies power to the lamp of Figure 1b must be run through the door. To allow the door to open, this means that the wiring must run through a flexible conduit between the body of the vehicle and the door. An example of such a flexible conduit is shown in Figure 1c.

In another possible configuration for the rear lamps of a vehicle, the tail lamps (including the stop lights, illumination lights, fog lights and indicators) are provided along the outer side edges of the vehicle body. The number plate and associated illuminating lamps are provided at in the upper part of the rear of the van, above the door.

### Summary

Aspects of the present invention are set out by the claims.

Aspects of the present disclosure provide a multifunctional, integrated lamp assembly for a vehicle. Lamp assemblies according to this disclosure offer improvements over many know lamp assemblies by integrating multiple lighting functionalities into an integrated lamp assembly. In particular, lamp assemblies according to the disclosure include a cavity configured to house a light source and emit light in a first direction generally away from the vehicle body through a cover. A window is also provided which is configured to emit light in a second direction to illuminate a vehicle component. Since the window is configured to illuminate a vehicle component, the window is configured to direct light generally towards the vehicle body.

The window is configured to emit (or transmit) light that is generated by a light source positioned within a cavity behind the window, within the lamp assembly. The window is configured to direct light from the light source through the opening of the window. Additional reflective elements can be included to direct light from the window onto the vehicle components.

Vehicle components generally comprise component parts of the vehicle or surface mounted features. Vehicle components may be interior or exterior to the vehicle. For example, vehicle components include license plates, handles, door recesses, steps, and the like.

Advantageously, the lamp assembly can be provided as a self-contained integrated unit configured to be secured as a static part in a vehicle assembly. A single connector for connecting the power supply to the lamp assembly.

The lamp assembly may also comprise control components configured to control the light source(s) within the lamp assembly in response to a detected vehicle condition. For example, the

For example, a lamp assembly configured for use as a rear light assembly for a vehicle may include, in an integrated housing, rear position lamps (for use in darkness), stop lamps (also known as brake lights), and lights for illuminating components that are mounted on or form part of the vehicle body. A window can be provided in the housing of the lamp assembly to illuminate vehicle components. One example of a vehicle component that can be illuminated by lamp assemblies described in this document is a license plate (licence plate). One example of a vehicle component that can be illuminated by lamp assemblies described in this document is a step. These specific features serve as specific examples of the general concept that illumination is provided by the lamp assembly for a vehicle component.

There is provided a lamp assembly (or 'lighting module', or 'lamp module') for a vehicle. The lamp assembly may comprise a housing comprising a cavity configured to house a first light source. The lamp assembly may further comprise an exterior cover configured to transmit light from within the cavity to an exterior of the vehicle in at least a first direction. The lamp assembly may further comprise a window provided in a wall of the housing, and the window may be oriented to transmit light in a second direction towards a first component of the vehicle. An additional light source may be provided in a cavity behind the window and be configured to emit light though the window towards the vehicle component.

By providing a lamp assembly configured to transmit light in a first (generally outward) direction through an appropriate exterior cover, and in a second direction towards a vehicle component via a window, it is possible to integrate multiple lighting functionalities into a single lamp assembly whilst appropriately directing light through the window towards a vehicle component. By providing such an integrated system, the complexity and/or weight of the electrical harness(es) required to power the required lamps in a vehicle. Moreover, the lamp assembly can be mounted in a static vehicle component (e.g. a non-articulating panel, rather than doors or tailgates), which further reduces the complexity of the harness and its vulnerability to damage, e.g. due to water ingress.

Optionally, the lamp assembly further comprises a second light source arranged to transmit light through the window.

Optionally, the window further comprises a transparent or translucent cover.

Optionally, the cover comprises an optical element configured to direct light towards the first component of the vehicle.

Optionally, in use, the window is angled towards a central longitudinal axis of the vehicle, with an acute angle alpha (*α*) formed between the window and the longitudinal central axis of the vehicle.

Optionally, an opening of the window in the wall of the housing is recessed from a surface of the wall.

Optionally, the lamp assembly further comprises an additional window configured to direct light from a light source to a second component of the vehicle.

Optionally, the lamp assembly is a tail light module or a head light module for the vehicle.

There is further provided a vehicle assembly comprising any of the lamp assemblies described herein.

Optionally, the window is configured to illuminate a vehicle component mounted on an exterior panel of the vehicle assembly.

Optionally, the vehicle component includes one or more of:
a recess for a vehicle identification plate;
a vehicle identification plate (or 'license plate');
a handle;
a step; or
an interior cavity of the vehicle.

Optionally, the exterior panel comprises a recess, and the window is configured to illuminate the recess.

Optionally, the exterior panel comprises an outer edge, and the recess comprises an opening at the outer edge of the exterior panel.

Optionally, the lamp assembly including the window is provided on a static vehicle component.

Optionally, the recess is formed in a movable component of the vehicle (e.g., a door), the movable component of the vehicle being movably mounted with respect to the static component

Optionally, the recess comprises a rear surface, and the rear surface is angled to face (or angled towards') the window.

Optionally, the recess comprises one or more mounting components for mounting a vehicle identification tag [e.g. a number plate or a vehicle make/model, etc].

Optionally, the window opens into or is aligned with the opening of the recess.

There is further provided a vehicle component for a vehicle assembly. The vehicle component may comprise an exterior surface and an outer edge. The vehicle component may further comprise a recess in the exterior surface configured to receive an identification plate for the vehicle. The recess may comprise an opening at the outer edge.

Optionally, the recess further comprises a rear surface, and the rear surface comprises mounting components for mounting a vehicle identification plate within the recess.

Optionally, the component comprises a rear panel of a vehicle.

Optionally, the rear panel forms a door for a vehicle.

Optionally, the edge of the door comprises the opening comprises a first door edge, and the first door edge comprises mounting fixtures for hingedly mounting the door to a static vehicle component.

Optionally, the door is mounted to the static vehicle component, the static component of the vehicle comprises a lamp assembly, and the opening of the recess at the edge of the door is adjacent the lamp assembly.

These advantages and more will be further understood based on the following detailed description and the accompanying drawings.

### Brief description of the drawings

A number of non-limiting, exemplary embodiments will now be described with reference to the following drawings in which:
Figures 1a-1c show the rear portion of various known vehicle assemblies comprising multiple lamps;
Figure 2 shows a rear view of a vehicle comprising a lamp assembly and rear door configuration according to first embodiment of the disclosure;
Figure 3 shows a rear view of a vehicle comprising a lamp assembly and rear door configuration according to a second embodiment of the disclosure;
Figure 4 shows an enlarged perspective view of the lamp assembly of Figure 2;
Figure 5 shows an enlarged rear view of a lamp assembly shown in Figure 3;
Figure 6a shows a rear view of an alternative lamp assembly, with an enlarged perspective view of the lamp assembly of Figure 6a shown in Figure 6b; and
Figure 7 shows a cross-sectional view of a lamp assembly according to the disclosure.

### Detailed description of the drawings

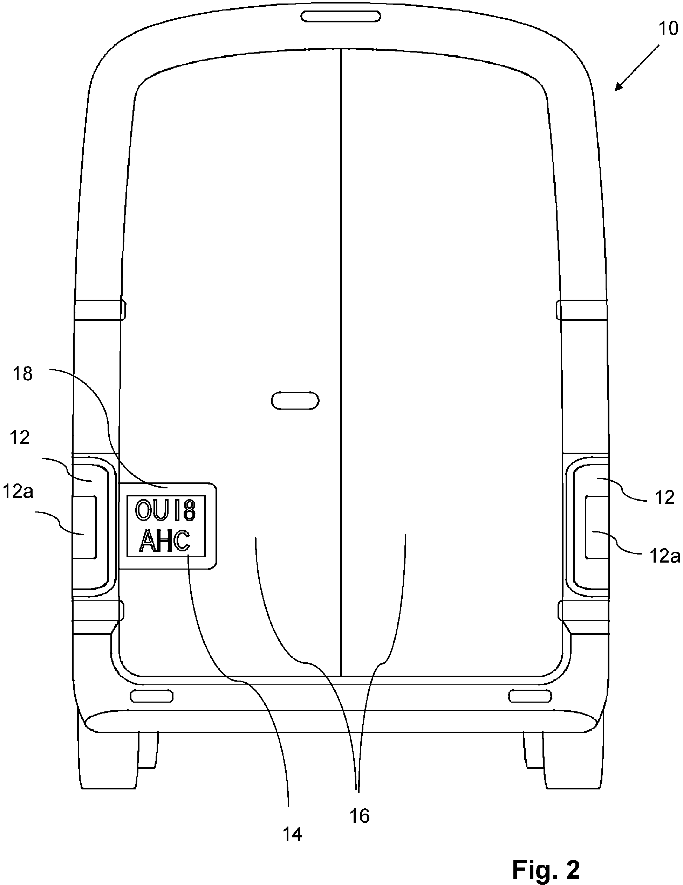

Figure 2 shows a vehicle 10 comprising a rear lamp assembly 12. The rear lamp assembly 12 comprises the rear position lamps 12a for the vehicle 10, and optionally stop lamps, signalling lamps, and/or fog lamps. The vehicle 10 further comprises a license plate 14 (or number plate') bearing the registration number of the vehicle. The license plate 14 is mounted on a door 16 of the vehicle 12, towards an outer edge of the door 16. The vehicle 10 comprises two rear doors 16 each hinged at an outer edge to allow the doors to be opened. The license plate 14 is mounted in a recess 18 in the door 16. The recess is located adjacent to the lamp assembly 12.

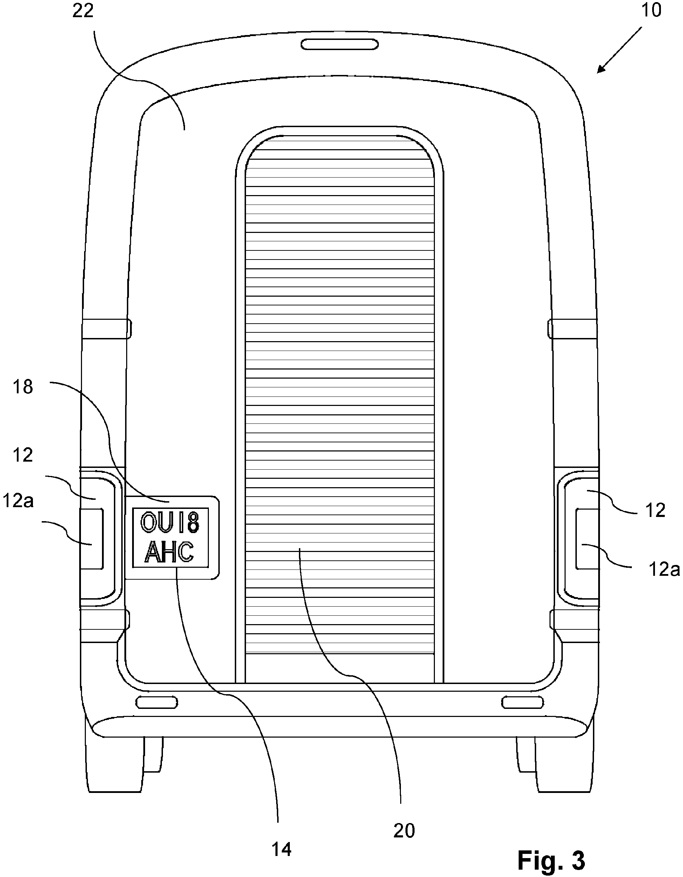

Figure 3 shows an alternative door configuration for a vehicle 10. In this configuration, the lamp assembly 12 is in the same location as described above with reference to Figure 2. However, instead of hinged doors, the configuration in Figure 3 shows a rolling shutter door 20 in a rear panel 22 of the vehicle 10. The shutter door 20 extends across half of the width of the vehicle, positioned along the central axis of the vehicle 10. In this configuration, rather than being located on a door, the license place 14 is mounted on a rear panel 22 of the vehicle 10, adjacent to lamp assembly 12.

Disclosure is provided of a lamp assembly 12 that does not make use of the functionality of illuminating the license plate 14. Figures 2 and 3 show license plates 14 positioned to the left side, and illuminated by the lamp assembly 12 that is positioned on the left side. Thus, the lamp assembly 12 that is positioned on the right side does not illuminate the license plate 14. Nevertheless, the same lamp assembly 12 is used, which reduces design and manufacture costs. This same principle applies for vehicles for which the license plate 14 is positioned to the right side.

As an alternative to the arrangement shown in Figure 3, a rolling shutter door 20 is provided which extends across the full width of the vehicle. In this configuration, the license place 14 is no longer mounted on the rear panel 22 of the vehicle 10. For this example, neither of the left and right lamp assemblies 12 illuminate the license plate 14. Nevertheless, manufacturing costs are saved by making use of the same lamp assembly 12, so that the same parts are used by several different vehicles, which reduces design and manufacture costs.

For the cases in which the lamp assembly 12 does not illuminate the license plate 14, options include:
Using the lamp assembly 12 to illuminate something else, such as the step area, as is provided for the barn door arrangement shown in Figure 2.
Not making use of the optical features, while leaving them in place, which saves assembly costs, because the same lamp assembly 12 is used for a number of different vehicles.
Replacing the optical features by a blanking plug, which saves costs by removing expensive parts.

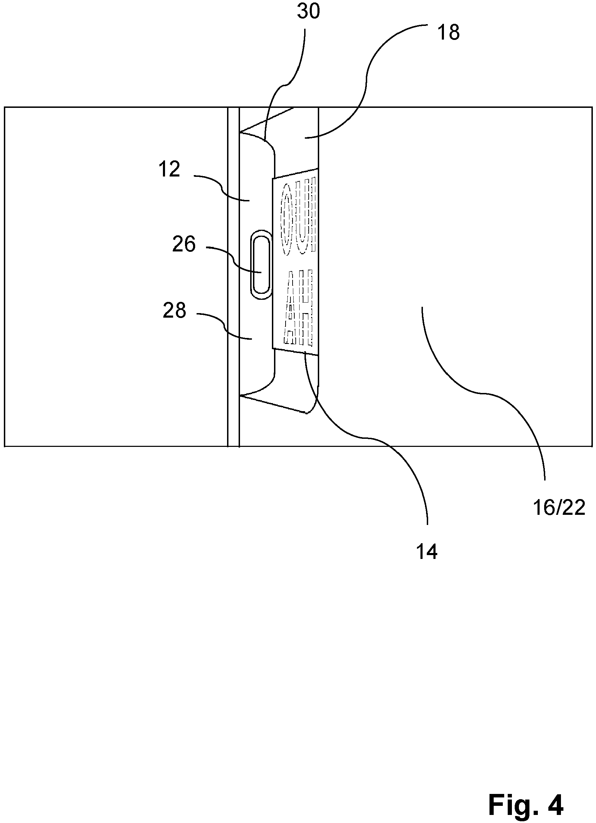

Figure 4 shows an enlarged perspective view of the lamp assembly 12 and the license plate 14 mounted in recess 18. As shown in Figure 4, in addition to the rear position lamps 12a, the lamp assembly 12 further comprises a window 26 configured to direct light from a light source (not shown in Figure 4) towards a vehicle component, in this case licence plate 14. The window 26 is oriented such that light from the light source shines through the window 26 onto the license plate. As shown in Figure 4, the window 26 can be provided in side wall 28 of the lamp assembly 12, which faces towards a longitudinal central axis of the vehicle. The window 26 can be angled such that light emitted through the window 26 impinges upon the surface of the license plate 14. Thus, the light is directed towards a forward direction of travel of the vehicle, at an angle with respect to the longitudinal central axis of the vehicle.

The window can be configured such that there is no direct line of sight towards the light source from directly behind the vehicle, e.g. by the driver of a vehicle following the vehicle 10. The configuration of the window 26 to prevent a direct line of sight to the light source from behind the vehicle can be determined based on local or international regulations that prohibit visible white lights at the rear of a vehicle. For example, a zone in which the light source should not be viewable through the window 26 can be established. The zone may be defined as the region bounded by two lines diverging from each other at an angle of 30 degrees in a rearward direction (with reference to the vehicle), and arranged symmetrically about a longitudinal axis of the vehicle. The skilled person will appreciate that this zone can be adapted to suit regulations as required.

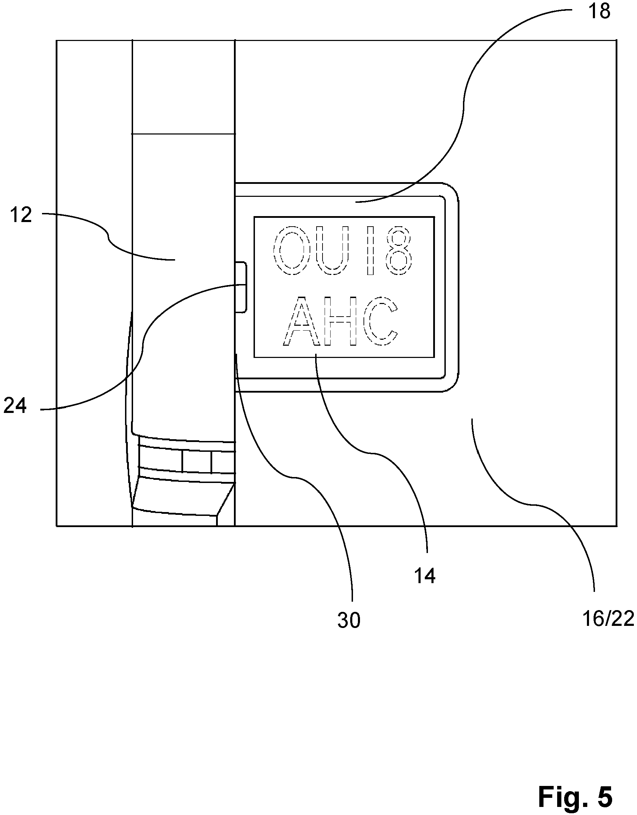

To limit the direct line of sight through the window from behind the vehicle in the pre-defined zone, the window may be shrouded with a lip or rim extending at least partially around its circumference. Alternatively, the opening of the window can be recessed or set back from the wall of the housing in which it opens. In the embodiment shown in Figure 4, the window 26 is recessed in the side wall 28 of the lamp assembly 12. An alternative configuration is shown in Figure 5, in which a lip 24 is provided around a partial circumference of the window 26. Figures 4 and 5 also show the configuration of a panel (e.g. door 16 or rear panel 22) in accordance with an exemplary embodiment. As shown in Figures 4 and 5, the recess 18 is open at one end, along the edge of the panel. The opening 30 (formed in this case by an open edge to the recess 18) allows access to the recess from the side or edge of the panel (e.g. a direction perpendicular to the surface in which the recess is formed). The access into the recess 18 from the side means that the opening 30 of the recess can be aligned with the window 26 to allow a light source behind the window 26 to illuminate the interior of the recess 18. By providing an open end to the recess, assembly of the vehicle components can be simplified because there is no need (or a greatly reduced need) to insert the lamp configured to illuminate the recess 18 within a sidewall of the recess 18, or employ optical elements to guide light from the window 26 into the recess from the front of the panel.

It will be appreciated that although the configuration of the recess 18 shown in Figures 4 and 5 is particularly well suited for use with the lamp assembly 12 described above, such a combination is not essential and advantages associated with both the recess 18 and the lamp assembly 12 can be realised independently of each other.

For example, the panel (door 16 or rear panel 22) having an open-ended recess 18 can be used in combination with a lamp for illuminating the recess 18, which is not part of an integrated lamp assembly as described above. Similarly, lamp assembly 12 can be used in combination with optical elements to direct light from a light source into a recess having four side walls (i.e. no open end at the edge of the panel). Optical elements (e.g. lenses, prisms, light guides and/or mirrors) can be used in all embodiments to direct light from the light source behind the window towards into the recess 18.

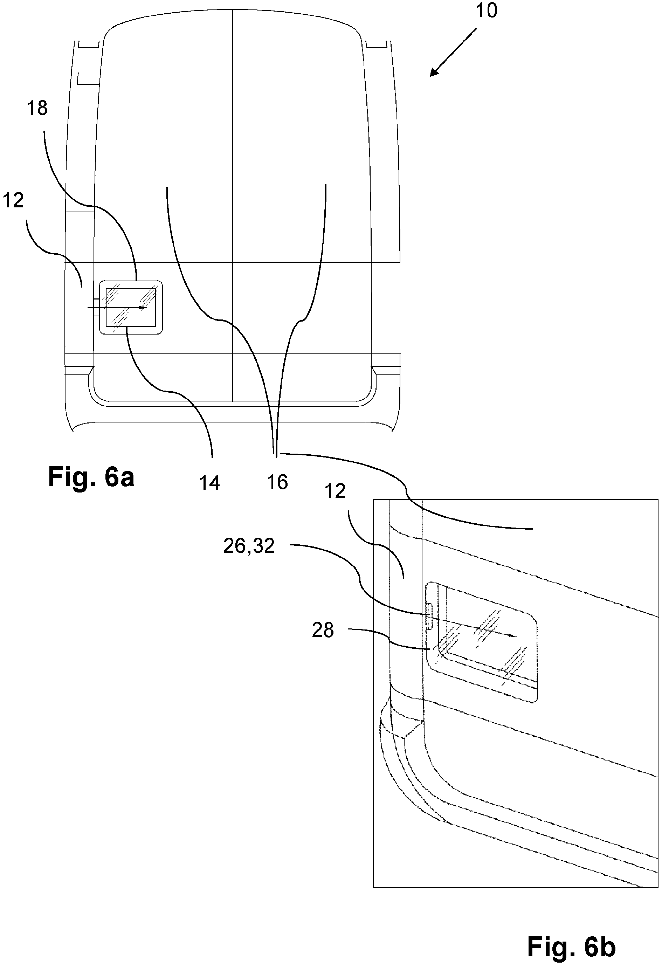

Figures 6a and 6b show an exemplary configuration in which an optical element is employed to illuminate the licence plate 14 disposed within a recess. As shown in Figure 6a, the recess 14 is positioned in a door (or a rear panel) of the vehicle, adjacent lamp assembly 12. In the embodiment shown in Figure 6a, the recess 18 does not comprise an open end 30. In the embodiment shown in Figures 6a and 6b, the window 26 is aligned with an opening 32 in a side wall of the recess 18. The window is in communication with a transparent light guiding material which fills (or at least partially fills) the recess 18 to guide light from a light source behind the window to illuminate the licence plate 14.

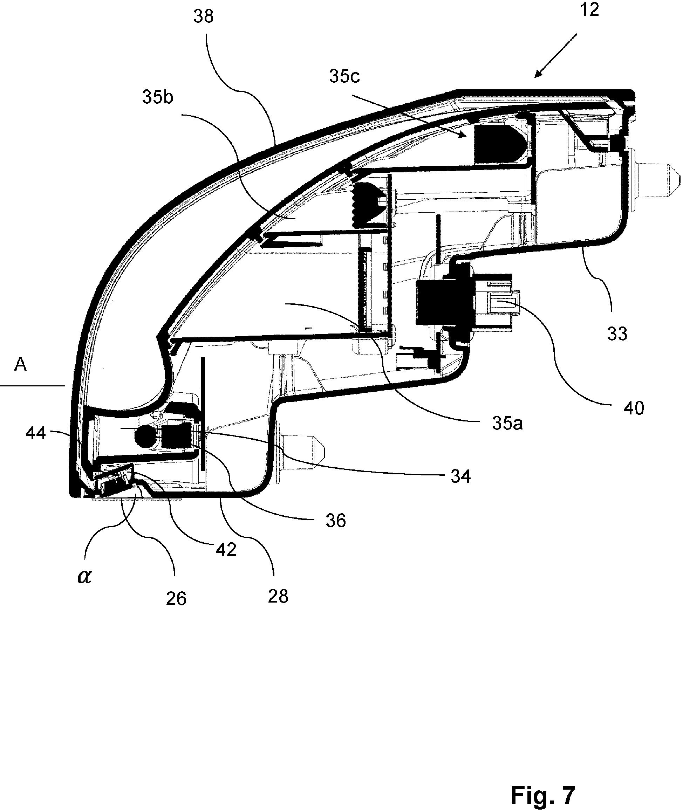

An exemplary lamp assembly 12 will now be described in more detail with reference to Figure 7. Figure 7 shows a cross-sectional view of a lamp assembly 12 described above.

As shown in Figure 7, the lamp assembly 12 comprises a housing 33 which houses the light sources for the lamp assembly. The housing 33 comprises at least one cavity 34, which houses one or more light sources 36. The light source 36 is configured to emit light through an exterior cover 38, which closes the cavity 34 and protects the light source 36 from the environment. The light source 36 can be any suitable source for emitting visible light. In at least one embodiment, the light source 36 comprises one or more LEDs.

The exterior cover 38 is configured to transmit light therethrough and may comprises any transparent, semi-transparent or translucent material. The lamp assembly 12 is configured to emit light from the light source 36, through the cover 38 in a first direction. The first direction is generally a direction away from the body of the vehicle 10. In one example, the first direction is indicated by arrow A. Arrow A indicates a rearward direction with respect to the vehicle 10. For the example of a rear lamp assembly, the first direction may be opposite to a forward direction of travel of the vehicle.

The lamp assembly 12 shown in Figure 7 is a wrap around light assembly 12, and is configured to emit light away from the vehicle 10, in multiple directions. The lamp assembly 12 also comprises additional cavities 35a, 35b, 35c. These cavities house additional light sources, for example fog lamps, reversing lamps, indicator lamps, and stop lamps.

The lamp assembly 12 further comprises one or more connectors 40 configured for connection to an electrical harness configured to power and/or control the lamp assembly 12.

As shown in Figure 7, the window 26 is provided in a wall of the housing 33. The window 26 opens into a cavity 42, which houses a light source 44 for illuminating a vehicle component.

The window 26 is oriented to direct light from the light source 44 in a second direction, to illuminate a component of the vehicle. In the examples described above, the window 26 is show to illuminate a recessed license plate 14. However, it will be appreciated that the window 26 can be oriented to illuminate other components. For example, the window 26 may illuminate a step (interior or exterior), a handle or a recess behind a handle, a ledge, or another vehicle component. Note that to illuminate a vehicle component, the second direction is generally towards the vehicle (rather than away from the vehicle).

By providing a lamp assembly configured to emit light in a first direction, away from the vehicle, through a cover, and in a second direction, towards the vehicle through a window 26, an integrated lighting assembly can be provided which allows simplification of the harness for connecting lamps having different functions.

The exemplary lamp assembly 12 shown in Figure 7 comprises a window 26 configured to illuminate a license plate 14. The illumination of license plates and the manner in which they are illuminated is the subject of regulation in many territories. For example, it may be a regulatory requirement that license plates be illuminated with white light, but that the white light source that provides the illumination must not be visible within a predefined zone behind the vehicle. In the case of the license plates illumination, this means that the light from the light source must be directed towards a surface of the vehicle and the light source must be shielded from view in a predefined zone.

These requirements can be met using the configuration shown in Figure 7 by angling the window 26 towards the body of the vehicle 10. In other words, a plane in which the opening of the window extends forms an acute angle alpha (*α*) with the central longitudinal axis of the vehicle. In the embodiment shown in Figure 7, the angle of the window 26 is made possible by recessing the window 26 into a sidewall of the lamp assembly 12. However, it will be appreciated that the window 26 may instead protrude from the sidewall surface and be shielded from view in the predetermined zone by a lip, as shown in Figure 5.

The first direction is away from the vehicle, whereas the second direction is towards the vehicle. For the example of a rear lamp assembly, the first direction is opposite to a forward direction of travel of the vehicle, whereas the second direction is at an acute angle with respect to the forward direction of travel of the vehicle. Accordingly, the light emitted in the first direction is transmitted towards the external environment of the vehicle, whereas the light emitted in the second direction is transmitted towards the vehicle, to illuminate the component of the vehicle.

The acute angle alpha (*α*) between the opening of the window and the central longitudinal axis of the vehicle is selected to ensure compliance with vehicle regulations. Accordingly, the selected angle results in the light being guided in the correct direction. The window can be flat. The incident angle of the light to the plate and the plate angle are limited by regulations:
EU Regulations (ECE-1003-2010) set a maximum angle of 4 degrees for the orientation of the license plate with respect to a vertical axis.
US Regulations (FMVSS-108) set a maximum incident angle between light and license plate.

These regulations are satisfied by a lamp assembly that is configured to illuminate a license plate that is oriented with respect to the central longitudinal axis, as is permitted in the above examples specified by EU regulations of up to 4 degrees with respect to the vertical axis and by US regulations which allow a maximum incident angle between the light and the licence plate. At least some implementations of the lamp assembly disclosed satisfy EU regulations and US regulations.

A curved window may be used to illuminate the license plate. In this case, the acute angle (*α*) is defined as the angle alpha (*α*) between a plane tangent to the curved window and the central longitudinal axis. For example, the window can be convex or curved in shape. It may act as a lens.

Disclosure is provided of the angle alpha (*α*) between the window 26 and the central longitudinal axis being an acute angle. The angle may be between 0 and 90 degrees. It is possible to arrange the optics such that any angle will work within this range. Towards the limits of this range, the effectiveness is reduced of light being directed towards the license plate 14. It is found, in at least some implementations, that an angle in the vicinity of 20 degrees provides an optimal illumination of the license plate 14, although angles that provide less than optimal illumination of the license plate 14 are also useful and should also be considered as being within the scope of the present disclosure. Thus, the angle alpha (*α*) may be between 0 and 40 degrees, preferably between 10 and 30 degrees, more preferably between 15 and 25 degrees, and more preferably approximately 20 degrees.

The window 26 can include a transparent or translucent cover to protect the light source 44 from the external environment. The cover can comprise an optical element such as a lens, prism, mirror or light guide configured to direct light towards the component of the vehicle 10.

The exemplary lamp assembly 12 shown in Figure 7 is a tail lamp assembly. However, it will be appreciated that the lamp assembly shown in Figure 7 can be modified so that it may be used as a headlamp assembly.

Although not shown in Figure 7, the lamp assembly may further comprise additional windows configured to illuminate additional vehicle components.

The embodiments described above are provided as examples of ways in which embodiments of the disclosure may be put into effect. They are not intended to be limiting on the scope of the claims.

### Clauses

The following clauses form part of the description, and correspond to the claims as filed of the priority application GB2001256.3:
1. A lamp assembly for a vehicle, the lamp assembly comprising:
   a housing comprising a first cavity configured to house a first light source;
   an exterior cover configured to transmit light from within the cavity to an exterior of the vehicle in at least a first direction;
   a window provided in a wall of the housing, wherein the window is oriented to transmit light in a second direction towards a first component of the vehicle.
2. The lamp assembly of clause 1, further comprising a second light source arranged to transmit light through the window.
3. The lamp assembly of clause 1 or clause 2, wherein the window further comprises a transparent or translucent cover.
4. The lamp assembly of any preceding clause, wherein the cover comprises an optical element configured to direct light towards the first component of the vehicle.
5. The lamp assembly of any preceding clause, wherein, in use, the window is angled towards a central longitudinal axis of the vehicle, with an acute angle *α* formed between the window and the longitudinal central axis of the vehicle.
6. The lamp assembly of any preceding clause, wherein an opening of the window in the wall of the housing is recessed from a surface of the wall.
7. The lamp assembly of any preceding clause, wherein the lamp assembly further comprises an additional window configured to direct light from a light source to a second component of the vehicle.
8. The lamp assembly of any preceding clause, wherein the lamp assembly is a tail light module or a head light module for the vehicle.
9. A vehicle assembly comprising:
   the lamp assembly of any preceding clause.
10. The vehicle assembly of clause 9, wherein the window is configured to illuminate a vehicle component mounted on an exterior panel of the vehicle assembly.
11. The vehicle assembly of clause 9 or clause 10, wherein the vehicle component includes one or more of:
   a recess for a vehicle identification plate;
   a vehicle identification plate;
   a handle;
   a step;
   an interior cavity of the vehicle.
12. The vehicle assembly of any of clauses 9 to 11, wherein the exterior panel comprises a recess, and wherein the window is configured to illuminate the recess.
13. The vehicle assembly of any of clauses 9 to 12, wherein the exterior panel comprises an outer edge, and wherein the recess comprises an opening at the outer edge of the exterior panel.
14. The vehicle assembly of any of clauses 9 to 13, wherein the lamp assembly including the window is provided on a static vehicle component.
15. The vehicle assembly of any of clauses 9 to 14, wherein the recess is formed in a movable component of the vehicle, the movable component of the vehicle being movably mounted with respect to the static component.
16. The vehicle assembly of any of clauses 9 to 15, wherein the recess comprises a rear surface, wherein the rear surface is angled to face the window.
17. The vehicle assembly of any of clauses 9 to 16, wherein the recess comprises one or more mounting components for mounting a vehicle identification tag.
18. The vehicle assembly of any of clauses 9 to 17, wherein the window opens into or is aligned with the opening of the recess.
19. A vehicle component for a vehicle assembly, the vehicle component comprising:
   an exterior surface and an outer edge;
   a recess in the exterior surface configured to receive an identification plate for the vehicle,
   wherein the recess comprises an opening at the outer edge.
20. The vehicle component of clause 19, wherein the recess further comprises a rear surface, and wherein the rear surface comprises mounting components for mounting a vehicle identification plate within the recess.
21. The vehicle component of clause 19 or clause 20, wherein the component comprises a rear panel of a vehicle.
22. The vehicle component of any of clauses 19 to 21, wherein the rear panel forms a door for a vehicle.
23. The vehicle component of any of clauses 19 to 22, wherein the edge of the door comprising the opening comprises a first door edge, and wherein the first door edge comprises mounting fixtures for hingedly mounting the door to a static vehicle component.
24. The vehicle component of any of clauses 19 to 23, comprised in a vehicle, wherein the door is mounted to the static vehicle component, wherein the static component of the vehicle comprises a lamp assembly, and wherein the opening of the recess at the edge of the door is adjacent the lamp assembly.

## Claims

1. A lamp assembly (12) for a vehicle (10), the lamp assembly (12) comprising:
a housing (33) comprising a cavity (35a, 35b, 35c) configured to house a first light source;
an exterior cover (38) configured to transmit light from within the cavity (35a, 35b, 35c) to an exterior of the vehicle (10) in at least a first direction away from the vehicle; and
a window (26) provided in a wall of the housing (33), wherein the window (26) is oriented to transmit light in a second direction towards the vehicle, towards a first component of the vehicle (10);
wherein, in use, the window (26) is angled towards a central longitudinal axis of the vehicle (10), with an acute angle (*α*) formed between the window (26) and the longitudinal central axis of the vehicle (10).

2. The lamp assembly (12) of claim 1, wherein the acute angle (*α*) is between 0 and 40 degrees, preferably between 10 and 30 degrees, more preferably between 15 and 25 degrees, and more preferably approximately 20 degrees.

3. The lamp assembly (12) of claim 1 or claim 2, further comprising a second light source (36) arranged to transmit light through the window (26); and optionally,
the lamp assembly (12) further comprises an additional window configured to direct light from a light source to a second component of the vehicle (10).

4. The lamp assembly (12) of any preceding claim, wherein the window (26) further comprises a transparent or translucent cover.

5. The lamp assembly (12) of any preceding claim, wherein the cover comprises an optical element configured to direct light towards the first component of the vehicle (10).

6. The lamp assembly (12) of any preceding claim, wherein an opening of the window (26) in the wall of the housing (33) is recessed from a surface of the wall.

7. The lamp assembly (12) of any preceding claim, wherein the lamp assembly (12) is a tail light module or a head light module for the vehicle (10).

8. A vehicle assembly (10) comprising:
the lamp assembly (12) of any preceding claim.

9. The vehicle assembly (10) of claim 8, wherein the window (26) is configured to illuminate a vehicle component mounted on an exterior panel of the vehicle assembly (10).

10. The vehicle assembly (10) of claim 8 or claim 9, wherein the vehicle component includes one or more of:
a recess for a vehicle identification plate;
a vehicle identification plate;
a handle;
a step; and
an interior cavity of the vehicle (10).

11. The vehicle assembly (10) of any of claims 8 to 10, wherein the exterior panel comprises a recess, and wherein the window (26) is configured to illuminate the recess; and
wherein the exterior panel comprises an outer edge, and wherein the recess comprises an opening at the outer edge of the exterior panel.

12. The vehicle assembly (10) of claim 11, wherein the lamp assembly (12) including the window (26) is provided on a static vehicle component; and
wherein the recess is formed in a movable component of the vehicle (10), the movable component of the vehicle (10) being movably mounted with respect to the static component.

13. The vehicle assembly (10) of claim 11 or claim 12, wherein the recess comprises a rear surface, wherein the rear surface is angled to face the window (26).

14. The vehicle assembly (10) of any of claims 11 to 13, wherein the recess comprises one or more mounting components for mounting a vehicle identification tag.

15. The vehicle assembly (10) of any of claims 11 to 14, wherein the window (26) opens into or is aligned with the opening of the recess.
